Europäisches Patentamt

European Patent Office

Office européen des brevets

(19)

(11) Veröffentlichungsnummer: **0 008 664**
**B1**

(12)                    EUROPÄISCHE PATENTSCHRIFT

(45) Veröffentlichungstag der Patentschrift:
02.09.81

(51) Int. Cl.³: **C 08 F 14/06, C 08 F 6/16**

(21) Anmeldenummer: 79102666.9

(22) Anmeldetag: 26.07.79

(54) Verfahren zur Druck- und Restentgasung eines PVC-Wasser-Gemisches.

(30) Priorität: 27.07.78 DE 2832972

(43) Veröffentlichungstag der Anmeldung:
19.03.80 Patentblatt 80/6

(45) Bekanntmachung des Hinweises auf die Patenterteilung:
02.09.81 Patentblatt 81/35

(84) Benannte Vertragsstaaten:
AT BE CH DE FR GB IT NL

(56) Entgegenhaltungen:
CHEMICAL ABSTRACTS, Band 88, Nr. 2, 9. January 1978, Seite 37,
Zusammenfassung 7901v Columbus, Ohio, USA
CHEMICAL ABSTRACTS, Band 88, Nr. 6,
6. Februar 1978, Seite 13,
Zusammenfassung 38327s Columbus, Ohio, USA

(73) Patentinhaber. WACKER-CHEMIE GMBH,
Prinzregentenstrasse 22, D-8000 München 22 (DE)

(72) Erfinder: Hager, Claus, Ing. grad., Römerstrasse 23,
D-8341 Julbach (DE)
Erfinder: Wiedholz, Rudolf, Dr. Dipl.-Chem.,
Gluckstrasse 41, D-8263 Burghausen (DE)

## Verfahren zur Druck- und Restentgasung eines PVC-Wasser-Gemisches

Bei der Entgasung von Polyvinylchloridpolymerisat-Wasser-Gemischen im Polymerisationsautoklaven ist es bei mittel bis stark schäumenden Produkten unvermeidbar, daß Schaum in den nachgeschalteten Abscheider übertritt. Bei großvolumigen Polymerisationsautoklaven sind üblicherweise mehrere Abscheider, deren Gesamtvolumen das des Autoklaven erreichen kann, nachgeschaltet.

In diesen Abscheidern wird der Schaum, der sowohl bei der Druckentgasung als auch bei der Restentgasung (Aufheizung durch Direktdampfeinblasung oder über Mantelheizung) übertritt, zurückgehalten. Dieser Übertrieb wiederum wird nach der Restentgasung des Autoklaven durch Direktdampfeinblasung oder Aufheizung über den Mantel im Abscheider restentgast. Da es sich bei dem Übertrieb um ein Gemisch aus verschieden thermisch belasteten Polyvinylchloridpolymerisaten handelt, wird der bei der Restentgasung zurückgehaltene Übertrieb ein weiteres Mal der hohen Entgasungstemperatur ausgesetzt. Dies führt zu einer weiteren Verminderung der Thermostabilität des Polyvinylchloridpolymerisates.

Wählt man aus diesem Grund für die Entgasung des Übertriebs in den Abscheidern eine niedrigere Entgasungstemperatur oder kürzere Entgasungszeit, um die Thermostabilität des Produktes nicht zu vermindern, so hat dies wesentlich höhere Rest-VC-Konzentrationen zur Folge, die zum Teil fünfzigmal höher liegen können als die im Autoklaven erreichbaren Restvinylchloridkonzentrationen des Polymerisates. Eine weitere Erscheinung bei diesem Entgasungssystem ist die, daß mit zunehmendem Übertrieb das Abscheidevolumen des Abscheiders und damit der Wirkungsgrad desselben in gleichem Maße abnimmt. Dies läßt einen weiteren Abscheider, der dem ersten nachgeschaltet oder parallelgeschaltet ist, notwendig werden. Bei stark schäumenden Polyvinylchloridpolymerisat-Wasser-Gemischen ist es sogar der Fall, daß die Entgasung unterbrochen werden muß, um die Abscheider entgasen und ablassen zu können. Dieser Vorgang führt zu einer wesentlichen Verlängerung der Gesamtzykluszeit.

Um die Schaumbildung im Autoklaven und dem daraus resultierenden Übertrieb zu reduzieren bzw. im Griff zu behalten, wird üblicherweise die Entgasungsgeschwindigkeit den erforderlichen Umständen entsprechend gedrosselt.

Ziel des erfindungsgemäßen Verfahrens war es, bei mindestens gleichbleibender Entgasungsgeschwindigkeit den Übertrieb restlos in einem Abscheidebehälter zurückzuhalten und ohne Beeinträchtigung der thermischen Stabilität des Polymerisates zu entgasen.

Gegenstand der Erfindung ist ein Verfahren zur Druck- und Restentgasung von emulgator- und/oder schutzkolloidhaltigen Polyvinylchlorid-polymerisat-Wasser-Gemischen im Anschluß an den Polymeristionsprozeß im Polymerisationsautoklaven bei höchstmöglichem Abscheidegrad des Übertriebs in einem nachgeschalteten Abscheider, dadurch gekennzeichnet, daß der im Abscheider anfallende Übertrieb kontinuierlich oder schubweise dem unteren Teil des Abscheiders durch ein mit dem Abscheider verbundenes Standrohr entnommen wird und zur Restentgasung vermittels einer mit dem Standrohr verbundenen unterhalb des Abscheiders angeordneten Pumpe in den Polymerisationsautoklaven zur Entgasung zurückgepumpt wird.

Besonders vorteilhaft ist das Verfahren dann, wenn zwischen dem Abscheider und der unterhalb angeordneten Pumpe eine Höhendifferenz von 2 bis 20 m liegt.

Durch das erfindungsgemäße Verfahren wird es möglich, das Abscheidervolumen gegenüber herkömmlichen Abscheidern wesentlich verringern zu können. Auch bei stark schäumenden Dispersionen ist es damit möglich, die Entgasung wesentlich zu beschleunigen, wobei das Polymerisat geringerer thermischer Belastung ausgesetzt werden muß und geringere Vinylchloridgehalte im Polymerisat resultieren als dies bei herkömmlicher Verfahrensweise möglich ist. Trotz schnellerer Entgasung der Polymerisatdispersion bei im wesentlichen gleichbleibendem Füllstand des Autoklaven nimmt die übergetriebene Schaummenge im Abscheider gegenüber herkömmlicher Verfahrensweise nicht zu. Im Fall, daß im Abscheider Entschäumungsmittel dem Übertrieb zur Entgasung zugesetzt werden muß, wird gegenüber herkömmlicher Verfahrensweise das Gesamtpolymerisat mit insgesamt weniger Entschäumer belastet, da der zugesetzte Entschäumer vom Abscheider zum Entgasungsautoklaven im Zyklus gefahren wird.

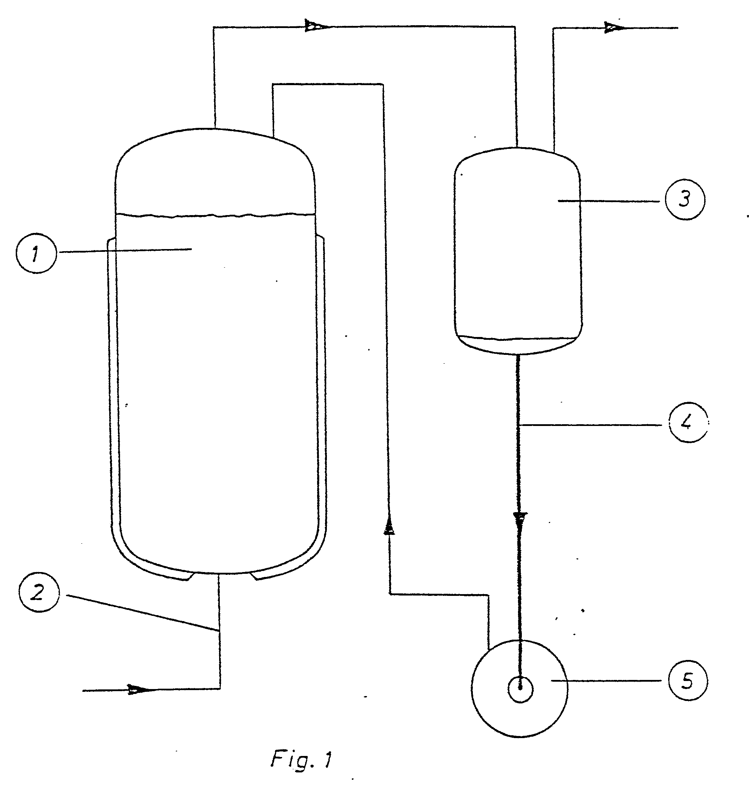

Aus der Figur 1 ist die schematische Darstellung des Verfahrensabalaufes ersichtlich.

Nach Beendigung der Polymerisation wird der Polymerisationsautoklav (1) vom anstehenden Monomerdruck im Autoklaven auf Normaldruck entspannt. Die Entgasungsgeschwindigkeit wird beispielsweise über ein am Austritt des Abscheiders (3) befindliches Regelventil kontinuierlich gehalten. Im allgemeinen treten Entgasungsgeschwindigkeiten von 1000 bis 2500 m³/Stunde auf. Hierbei schäumt die Polyvinylchloridpolymerisatdispersion im nicht vollgefüllten Autoklaven stark auf, wobei Schaum in den Abscheider übergetrieben wird. Der Abscheider ist erforderlich, damit Schaum bzw. Flüssigkeit nicht in das Gasometer gelangen kann bzw. in der anschließenden Vakuumphase nicht in die Vakuumanlage gesaugt werden kann. Im Abscheider kann der abgefallene Schaum mechanisch oder durch Zugabe von Entschäumungsmittel zerstört werden.

Über ein Standrohr (4) vermittels einer Pumpe (5) wird der Übertrieb zur Entgasung in den Autoklaven (1) zurückgeführt. Die gleiche Verfahrensweise ist auch dann angezeigt, wenn Polymerisat durch Einblasen von Wasserdampf (2) in das Entgasungsgefäß von anhaftenden Monomeren befreit werden soll. Dies erfolgt üblicherweise im Anschluß an die Druckentspannung nach der Polymerisation im Autoklaven.

Durch die erfindungsgemäße Verfahrensweise der Rückführung des Übertriebs aus dem Abscheider in das Entgasungsgefäß bleibt im wesentlichen das Abscheidevolumen für den Übertrieb aus dem Entgasungsschritt über den gesamten Entgasungszeitraum verfügbar. Eine Unterbrechung der Entgasung wird hinfällig. Weiterhin kann die Entgasung wesentlich schneller erfolgen, da auch ein gegenüber der bisher nur möglichen gebremsten Entgasung erhöhter Anfall von Übertrieb wieder in den Autoklaven zurückgepumpt und damit eine negative Beeinflussung des Abscheidegrades ausgeschlossen wird.

Die beim Entgasungsprozeß entstehenden Schaummengen sind naturgemäß von der Zusammensetzung der Polyvinylchlorid enthaltenden Dispersionen, speziell vom Gehalt an Emulgator und Schutzkolloid, abhängig. Unter emulgator- und/oder schutzkolloidhaltigen Polyvinylchloridpolymerisat-Wasser-Mischungen werden Dispersionen von Vinylchloridhomo- oder Copolymerisaten verstanden. Der Gehalt an Vinylchlorideinheiten im Copolymerisat unterliegt dabei prinzipiell keiner mengenmäßigen Begrenzung. Der Emulgatorgehalt der PVC-Polymerisat-Wasser-Mischungen liegt im allgemeinen bei 0,001 bis 5 Gew.-%. der Schutzkolloidgehalt kann zwischen 0,001 und 10 Gew.-% variieren. Bei stark schäumenden Dispersionen, Emulsionen oder Suspensionen kann durchaus bis zur Erreichung hinreichend niedriger Monomerkonzentrationen in der Dispersion eine Menge entsprechend $\frac{1}{4}$ bis $\frac{1}{2}$ des Dispersionsvolumens im Autoklaven in das Abscheidegefäß übergetrieben werden.

Die Entnahme des übergetriebenen Schaumes bzw. der Dispersion aus dem unteren Teil des Abscheiders durch ein Standrohr, das mit der Pumpe verbunden ist, wobei die Pumpe 2 bis 20 m unterhalb des Abscheiders angeordnet ist, beinhaltet den Vorteil, daß infolge des hydrostatischen Druckes eventuell im Standrohr und in der Pumpe eingezogene Schaumbereiche komprimiert und somit besser pumpbar werden. Dadurch wird es möglich, auf Spezialpumpen zu verzichten.

Die im Abscheider angesammelte Schaummenge kann natürlich auch in diesem Verfahren durch bekannte Maßnahmen der Schaumzerstörung beeinflußt werden. Darunter fallen sowohl mechanische Schaumzerstörung als auch Schaumzerstörung durch chemische Entschäumer. Die eingesetzte Menge Entschäumer läßt sich zudem durch die Rückführung des Übertriebs aus dem Abscheider in das Entgasungsgefäß insgesamt verringern, da der einmal zugeführte Entschäumer im Kreis gefahren wird.

Das Verfahren zur Druck- und Restentgasung bei restloser Rückhaltung und Rückführung des Übertriebs bietet sich in der Hauptsache für großvolumige Autoklaven an. Die Art der Entgasung kann aber auch bei kleineren Autoklaven technisch sinnvoll angewandt werden, wenn deren mehrere in einer Straße auf einen gemeinsamen Abscheider arbeiten.

Die Volumenangaben der in der Beschreibung genannten Gasmengen beziehen sich jeweils auf den Normzustand.

## Beispiel 1

Ein 80-m$^3$-Autoklav wird nach Beendigung der Polymerisation einer leicht schäumenden PVC-Type bei einem Umsetzungsgrad von ca. 85% über einen nachgeschalteten 12-m$^3$-Abscheider von 8,5 bar$_{abs}$ bis 1 bar$_{abs}$ in die Rück-VC-Anlage druckentspannt. Die Entgasungsgeschwindigkeit wird über ein am Austritt des Abscheiders befindliches Regelventil, in Abhängigkeit von Druck nach dem Regelventil, kontinuierlich gehalten und kann beliebig schnell gewählt werden. Vorzugsweise wird bei ca. 1000 bis 2500 m$^3$/Stunde druckentgast; in diesem Fall liegt die Entgasungsgeschwindigkeit bei ca. 1000 m$^3$/Stunde.

Hierbei schäumt die PVC-Suspension im Autoklaven, dessen Füllungsgrad ca. 80 bis 85% beträgt, stark auf, so daß Schaum in den Abscheider übergetrieben wird.

Dieser erste erhöhte Schaumanfall (ca. 10 bis 15 m$^3$/Stunde) bei der Druckentgasung sowie der zweite, der während des Aufheizens durch Dampfeinblasung und gleichzeitiger Mantelheizung bei ca. 75 bis 80°C auftritt, wird im Abscheider zurückgehalten und durch eine Pumpe kontinuierlich abgesaugt, die den Schlamm bzw. die Suspension in den Autoklaven zurückfördert. Die Förderleistung liegt bei ca. 10 bis 25 m$^3$/Stunde. Ebenfalls wird der zu Beginn der 20 Minuten dauernden Stripphase anfallende Schaum ca. 5 bis 10 m$^3$/Stunde, in den Autoklaven zurückgepumpt. Mit fortschreitender VC-Verarmung nimmt das Schäumen ab, so daß am Ende der Stripphase, während der ständig Vakuum angelegt ist, kein Schaum mehr in den Abscheider übertritt.

Mit Beendigung des Strippens und Beginn der Kühlung wird der Abscheider durch einen fest installierten Düsenring ausgewaschen, wobei das Waschwasser ca. 200 bis 400 l zusammen mit dem von der Abscheiderwandung abgespülten PVC in den Autoklaven zurückgepumpt wird.

Nach der Abkühlung des Autoklaven über den Mantel wird dieser, ohne das Vakuum zu brechen, durch eine unter dem Autoklaven stehende Pumpe (Förderleistung ca. 200 m$^3$/Stunde) entleert und auf die gleiche Weise wie der Abscheider gereinigt.

Die Konzentration des Restmonomeren beträgt 80 ppm. Eine thermische Schädigung sowie vermehrte Stippenbildung ist nicht zu beobachten.

### Beispiel 2

In den gleichen Autoklaven wie im Beispiel 1 wird unter gleichen Umständen wie dort beschrieben, jedoch stark schäumende PVC-Suspension entgast. Abweichend vom Beispiel 1 ist auf dem 12-m³-Abscheider ein mechanischer Schaumzerstörer, Nennleistung 10 kW, aufgesetzt.

Der übergetriebene Schaum kann aufgrund der großen Stabilität und der damit verbundenen langen Zerfallzeit sowie kurzzeitig auftretenden erhöhten Schaummengen während der Druckdestillation durch die Pumpe nicht vollständig abgeführt werden, so daß sich der ganze Abscheider füllt und die Schaumzerstörer-Turbine in den Schaum eintaucht.

Der Schaum wird durch die Turbine zerstört und im Abscheider zurückgehalten. Die Entgasungsgeschwindigkeit beträgt durchschnittlich ca. 1800 m³/Stunde. Während der Druckentgasung wird ca. 3 Minuten auf ca. 1000 m³/Stunde gedrosselt. Diese Drosselung erfolgt in Abhängigkeit von der Leistungsaufnahme des Schaumzerstörers.

Die übergetriebene Schaummenge beträgt im Durchschnitt ca. 15 bis 25 m³/Stunde als Suspension gemessen! Hierbei treten Spitzen bis ca. 30 m³/Stunde auf.

Die Entgasung erfolgt wie im Beispiel 1 beschrieben. Die Konzentration des Restmonomeren beträgt 84 ppm, wobei keine thermische Schädigung am PVC-Korn festgestellt wird.

### Patentansprüche

1. Verfahren zur Druck- und Restentgasung von emulgator- und/oder schutzkolloidhaltigen Polyvinylchloridpolymerisat-Wasser-Gemischen im Anschluß an den Polymerisationsprozeß im Polymerisationsautoklaven mit einem nachgeschalteten Abscheider, dadurch gekennzeichnet, daß der im Abscheider anfallende Übertrieb kontinuierlich oder schubweise dem unteren Teil des Abscheiders durch ein mit dem Abscheider verbundenes Standrohr entnommen wird und zur Restentgasung vermittels einer mit dem Standrohr verbundenen unterhalb des Abscheiders angeordneten Pumpe in den Polymerisationsautoklaven zur Entgasung zurückgepumpt wird.

2. Verfahren nach Anspruch 1, dadurch gekennzeichnet, daß zwischen Abscheider und Pumpe eine Höhendifferenz von 2 bis 20 m liegt.

### Claims

1. Process for releasing pressure and removing residual gas from polyvinyl chloride polymerisate/water mixtures containing emulsifiers and/or protective colloids following the polymerisation process in a polymerisation autoclave having a separator connected downstream, characterised in that the excess foam occuring in the separator is removed continuously or at intervals from the lower part of the separator by means of a vertical pipe connected to the separator and is pumped back for the removal of residual gas into the polymerisation and degassing autoclave by means of a pump connected to the vertical pipe and arranged beneath the separator.

2. Process according to claim 1, characterised in that there is a difference in height of from 2 to 20 m between the separator and the pump.

### Revendications

1. Procédé pour le dégazage par détente et le dégazage résiduel (complémentaire) de mélanges aqueux d'un polymère de chlorure de vinyle contenant des émulsionnants et/ou des coloïdes protecteurs, à la suite de l'opération de polymérisation et dans l'autoclave de polymérisation, lequel est suivi d'un séparateur, procédé caractérisé en ce que la matière qui déborde dans le séparateur est retirée en continu ou en discontinu au bas de celui-ci par un tube vertical lié au séparateur, et renvoyée au dégazage complémentaire dans l'autoclave par une pompe liée au tube vertical au-dessous du séparateur.

2. Procédé selon la revendication 1, caractérisé en ce qu'il y a une différence de niveau de 2 à 20 mètres entre le séparateur et la pompe.

*Fig. 1*